# EUROPÄISCHE PATENTSCHRIFT

(11) **EP 1 068 700 B1**
(45) Veröffentlichungstag und Bekanntmachung des Hinweises auf die Patenterteilung: **29.10.2003**
(21) Anmeldenummer: 99911746.8
(22) Anmeldetag: 06.03.1999
(51) Int. Cl.: H04L 12/40, H04L 29/14, H04L 12/26, B60R 16/02, H04L 25/08

(54) **SIGNALISIERUNGSENDSTUFE ZUR ERZEUGUNG DIGITALER SPANNUNGSSIGNALE AUF EINEM BUSSYSTEM**
SIGNALING OUTPUT STAGE FOR GENERATING DIGITAL VOLTAGE SIGNALS ON A BUS SYSTEM
ETAGE DE SORTIE DE SIGNALISATION SERVANT A PRODUIRE DES SIGNAUX DE TENSION NUMERIQUES SUR UN SYSTEME DE BUS

(30) Priorität: 28.03.1998 DE 19813952
(43) Veröffentlichungstag der Anmeldung: 17.01.2001
(73) Patentinhaber: Conti Temic microelectronic GmbH, 90411 Nürnberg (DE); ROBERT BOSCH GMBH, 70442 Stuttgart (DE)
(72) Erfinder: FENDT, Günter, D-86529 Schrobenhausen (DE); MÜLLER, Norbert, D-86529 Schrobenhausen (DE); BISCHOFF, Michael, D-85111 Adelschlag (DE); RINKENS, Johannes, D-85055 Ingolstadt (DE); SCHÄFFER, Stefan, D-86529 Schrobenhausen (DE); NITSCHKE, Werner, D-71254 Ditzingen (DE); KARL, Otto, D-71229 Leonberg (DE); BAUER, Joachim, D-71720 Oberstenfeld (DE)
(86) Internationale Anmeldenummer: EP9901460
(87) Internationale Veröffentlichungsnummer: WO99050996

(56) Entgegenhaltungen:
- DE-A- 4 403 899
- DE-A- 19 523 031
- DE-C- 19 503 460
- US-A- 5 357 518

## Beschreibung

Die Erfindung betrifft eine Signalisierungsendstufe zur Erzeugung digitaler Spannungssignale auf einem Bussystem gemäß dem Oberbegriff des Patentanspruchs 1.

Als Signalisierungsendstufen werden im Stand der Technik üblicherweise sogenannte Push-Pull-Signalisierungsendstufen mit zwei Transistor-Schaltmitteln eingesetzt, die eine Leitung entweder mit der Versorgungsspannung oder Masse verbinden. Leitungskurzschlüsse auf ein Störpotential, bspw. auf Masse, die Versorgungsspannung oder ein anderes, drittes Spannungspotential führen im allgemeinen zur Schwächung der erforderlichen Signalamplitude und damit zu Fehlern bei der Signalerkennung bis hin zum Ausfall der Signalisierungsendstufe.

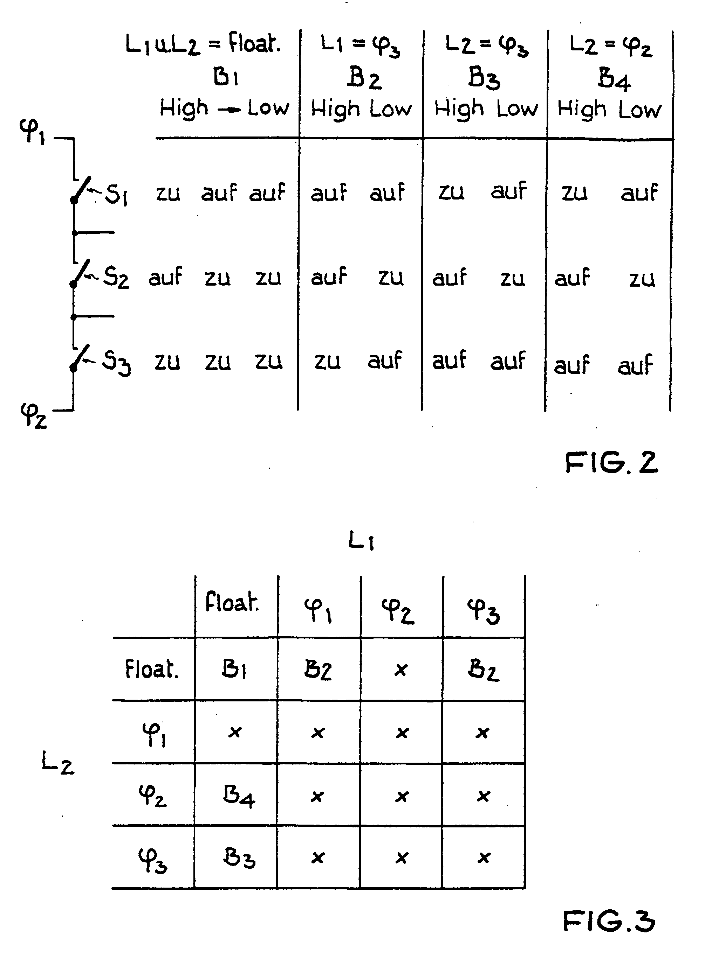

Zur Vermeidung dessen ist aus der DE 196 11 944 A1 ein integrierter Sende- und Empfangsschaltkreis zur Kopplung eines Steuergerätes an einen Zweidraht-Bus zu entnehmen, bei dem eine Prüfeinrichtung zur Erkennung von Fehlern auf den Leitungen des Bussystems und neben einem Normalbetriebszustand für den Fall eines Fehlers weitere unterschiedliche Betriebszustände vorgesehen sind, die eine an die Art des Fehlers angepaßte Kommunikation ermöglichen. Es handelt sich um eine fehlerabhängige Umschaltung der Abschlußelemente des Schaltkreises. Die Schaltmittel der Figur 3a sind ermöglichen es, anstelle der Abschlußwiderstände 16 und 17, die im Normalbetrieb CAN_H auf GND und CAN_L auf VCC legen, zunächst CAN_L auf Vbatt zu legen, falls mit VCC ein Empfang des Signals nicht mehr möglich ist, darüber hinaus äußerst kleine Stromquellen 26 und 27 einzusetzen, die eine strombegrenzte Aufrechterhaltung des Signalempfangs ermöglichen, In spalte 7, ab Zeile 56 kommt wird angedeutet, daß im Falle eines Defekts auf eine signalisierung verzichtet wird, da das sendesignal TxD sich nicht mehr auf den Bus auswirken kann. Die Umschaltung betrifft daher primär den Empfang von Signalen bei gestörtem BuS und nicht deren Aussendung.

Die DE 39 01 589 A1 beschreibt die Ankopplung eines Busteilnehmers, bei der mittels eines Widerstandsnetzes sichergestellt wird, daß auch bei Fehlern auf den Busleitungen mit Sicherheit die auf dem Datenbus vorhandenen Daten erkannt werden. Es handelt sich also wiederum um eine Berücksichtigung der Fehler beim Empfang, nicht beim Senden, wenngleich auch die Sendeausgänge mit über dieses Widerstandsnetzwerk, jedoch starr und damit nicht an die Fehlerart anpaßbar, verbunden sind.

Auch die DE 195 09 133 A1 beschreibt wiederum eine Busfehler kompensierte Empfangseinrichtung, bei der zwischen Ein- und Zwei-Drahtempfang gewechselt wird.

Diesen Druckschriften können daher zwar die verschiedenen Fehlervarianten, insbesonder Kurzschlüsse auf versörgungsspannungs- oder Massepotential, nicht jedoch eine daran angepaßte Signalerzeugung entnommen werden.

Die DE 44 03 899 A1 lehrt eine solche gattungsbildende Signalisierungsendstufe in einer Vorrichtung zur seriellen Übertragung von Daten zwischen mindestens zwei Stationen. So wird in Figur 2 eine Signallsierungsendstufe gezeigt, bei der ein oberes Schaltmittel (T2) zwischen einem ersten Spannungspotential (V2) und einer ersten Leitung (S+) und ein unteres Schaltmittel (T3) zwischen einem zweiten Spannungspotential (Masse) und der zweiten Leitung (S-) geschattet ist. Außerdem sind für den Fall eines Fehlers auf einer der Leitungen unterschiedliche Betriebszustände vorgesehen, die ein an die Art des Fehlers angepaßte Signalerzeugung ermöglichen. Die Prüfung der Leitungen auf Kurzschlüsse und die Steuerung der Signalisierung wird direkt schaltungstechnisch realisiert, d.h. sich verschiebende Spannungspotentiale auf den Leitungen führen direkt zu anderen elektrischen Verhältnissen und einer damit anderen Signalisierung. So ist eine unabhängige Signalisierung auf beiden Leitungen S+ und S- vorgesehen, d.h. Leitung s+ ist nicht nur über R5,T2 auf V2 schaltbar, sondern auch über den hochohmigen Widerstand R7 permanent auf Masse geerdet, während s- über R4 hochohmig auf V2 ruht und durch schalten von T3 auf Masse gezogen werden kann.

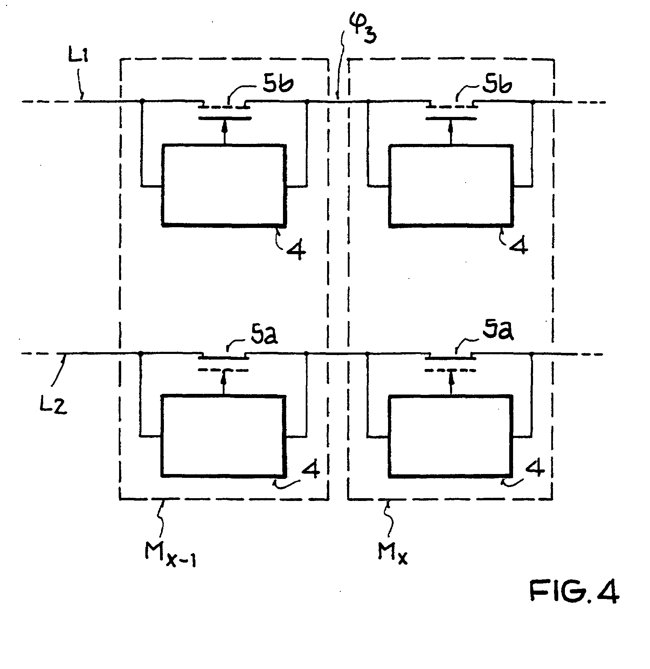

Die Signalisierung kann somit sowohl über S+ als auch S- im Notfall alleine durchgeführt werden. Im Normalbetrieb weisen beide Leitungen zueinander gerade inverse Signale auf (vgl. Fig. 4a). Außerdem weisen beide Leitungen ein Ruhepotential auf.

Die DE 195 03 460 C1 weist in Analogie dazu ebenfalls eine fehlertolerante Endstufe der gattungsbildenden Art mit einer Prüfeinrichtung (Zustandserkennungsmodul) zur Erkennung von Fehlern und deren Art sowie ein Sendemodul mit unterschiedlichen Betriebsarten auf, bei der jedoch wiederum erste und zweite Leitung des Bussystems voneinander unabhängig signalisieren können, denn beide Leitungen weisen jeweils eine eigene Verbindung zu einem hohen und einem niedrigen Spannungspotential auf, wie dies aus der dortigen Figur 2 erkennbar ist.

Ausgehend von diesem Stand der Technik ist es die Aufgabe der Erfindung, eine weitere busfehlertolerante Signalisierungsendstufe anzugeben, die keine permanente Ruhestrombelastung aufweist und dennoch auf einfache Weise zumindest für einen Großteil der möglichen Fehler eine Fortsetzung der signalerzeugung in einem anderen Betriebszustand ermöglicht. Außerdem soll eine besonders bevorzugte Verwendung in einem Bussystem angegeben werden, bei der die Sicherheit der Aufrechterhaltung der Datenübertragung auch bei Fehlern auf dem Bussystem weiter verbessert wird.

Diese Aufgabe wird durch die kennzeichnenden Merkmale des Patentanspruchs 1 sowie durch die Verwendung gemäß der Anspruch 12 gelöst. Vorteilhafte Weiterbildungen sind den untergeordneten Ansprüchen zu entnehmen.

Durch die zwei Leitungen und drei Schaltmittel wird es möglich, die Module über beide Leitungen gemeinsam oder auch über nur eine der Leitungen anzusteuern, wenn auf der anderen Leitung ein festes Störpotential anliegt. Beide Leitungen können beide Spannungspotentiale annehmen.

Liegt eine Leitung auf einem festen Störpotential, bspw. auf Masse oder der Versorgungsspannung, erfolgt die Signalisierung bzw. Signalübertragung dann als Potentialdifferenz zwischen dem festen Störpotential der kurzgeschlossenen Leitung und der ungestörten Leitung, deren Potential entsprechend gesteuert wird.

Der aufgrund der nunmehr drei Schaltmittel und der zwei Leitungen zunächst kostenmäßig höhere Aufwand ist unter Berücksichtigung der neuen vielfältigen Möglichkeiten der Signalerzeugung und der damit gewonnenen Sicherheit vernachlässigbar.

Die Verschiedenen Verfahren zur Erzeugung des digitalen Spannungssignals sind auf jeweils einen Betriebszustand optimiert. Ein Masse- als auch ein Kurzschluß auf ein drittes Spannungspotential in einer der beiden Leitungen führt noch nicht zum Ausfall der Module oder der Signalisierungsendstufe. Durch eine Prüfeinrichtung wird der jeweilige Betriebszustand erkannt und die Signalisierungsendstufe entsprechend dem Prüfergebnis gesteuert, d.h. die Verfahren zur Erzeugung des spannungssignals gegebenenfalls gewechselt

Insbesondere für ein Bussystem in einem Insassenschutzsystem bspw.eines Kraftfahrzeuges, bei dem über das Bussystem Steuermodule zur Auslösung von Insassenschutzeinrichtungen kommunikationsfähig untereinander sowie mit der Zentraleinheit verbunden werden, ist eine derartige Absicherung gegen Einfachfehler durch Leitungskurzschlüsse wichtig. Diese Kurzschlüsse können insbesondere gegen das Massepotential, welches meist am metallischen Fahrzeuggehäuse geführt wird, oder gegen die Betriebsversorgungsspannung auftreten, welches als Versorgungsspannungsnetz in den Kabelsträngen des Fahrzeuges unmittelbar benachbart geführt wird. Eine Zerstörung der Isolation von Leitungen kann bei Kraftfahrzeugen aufgrund der starken mechanischen Belastungen nie ganz ausgeschlossen werden. Insbesondere auch im Verlauf eines Unfalls kann es zu einer Zerstörung der Leitungen kommen. um bei solchen Fehlern dennoch die für den Insassenschutz sicherheitsrelevanten Signale zu den Steuermodulen zur Auslösung der Insassenschutzeinrichtungen übertragen zu können, ist die Möglichkeit, auch bei Fehlern auf einer der Leitungen noch mittels der anderen signalisieren zu können, ein entscheidender Fortschritt. Um auch bei einem Kurzschluß auf die Versorgungsspannung, bspw. die Batterienetzspannung, weiterhin signalisieren zu können, ist es vorteilhaft, die zwei an den Schaltmitteln anliegenden Spannungspotentiale so zu wählen, daß jeweils eine noch als High-Spannungspegel erkennbare Potentialdifferenz entsteht. Das höhere der beiden Spannungspotentiale sollte somit um einen entsprechenden Betrag gegenüber der Versorgungsnetzspannung erhöht werden. Eine Verwendung für andere Signalisierungsaufgaben ist selbstverständlich nicht ausgeschlossen.

Die Erfindung wird nachfolgend anhand eines Ausführungsbeispiels und der Figuren näher erläutert. Kurze Beschreibung der Figuren:
- Figur 1: Blockschema eines Bussystems mit einer Signalisierungsendstufe mit drei Schaltmitteln und zwei Leitungen gemäß der Erfindung
- Figur 2: Übersicht über die möglichen Signalisierungsverfahren gemäß der Erfindung
- Figur 3: Auswahlentscheidungstabelle des angewendeten Signalisierungsverfahrens auf Grund der gemessenen Betriebszustände
- Figur 4: Detail zweier Module mit Längsschaltern zur Begrenzung der Wirkung eines Kurzschlusses

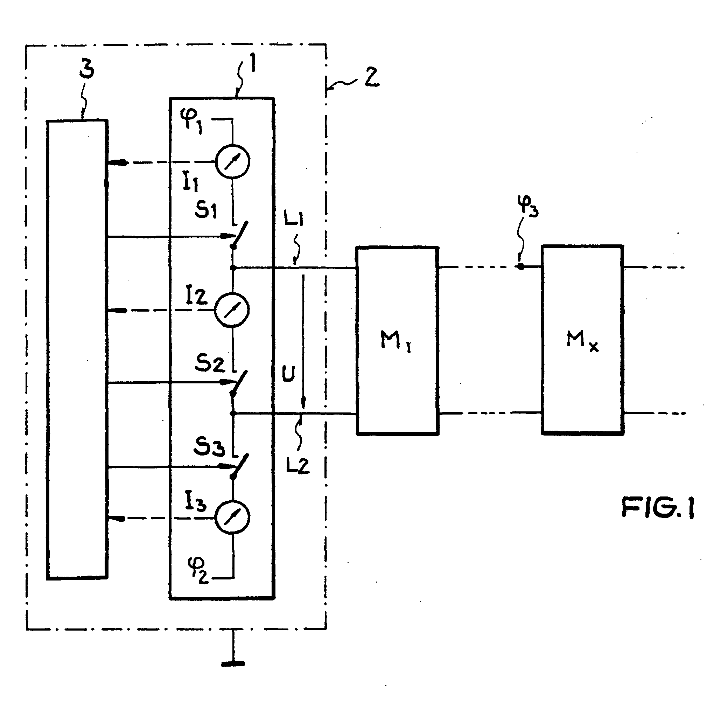

Die Figur 1 zeigt zunächst in Form eines Blockschemas das Bussystem mit einer Signalisierungsendstufe 1. Diese ist in diesem Ausführungsbeispiel Bestandteil der Zentraleinheit 2, kann jedoch grundsätzlich auch in den einzelnen Modulen vorgesehen werden, falls diese aktiv senden sollen und folglich eine Signalisierungsendstufe benötigen. Über die zwei Leitungen L1 und L2 sind die Module M1 ... Mx ... mit der Zentraleinehit 2 verbunden, in dem diese zwischen den zwei Leitungen L1 und L2 jeweils parallel hintereinander angeordnet sind. Die einzelnen Module M1 ...Mx empfangen jeweils die sich einstellende Spannungspotentialdifferenz U zwischen der ersten und zweiten Leitung L1, L2. Als High-Spannungspegel wird eine hohe Potentialdifferenz u zwischen L1 und L2 angesehen, als Low-Spannungspegel entsprechend eine niedrige Potentialdifferenz, insbesondere die Spannung Null. Die Zuordnung eines digitalen logischen Wertes (logisch 0 bzw. 1) ist davon unabhängig. So kann insbesondere als Ruhezustand ein High-Spannungspegel verwendet werden, um die Spannungsversorgung der einzelnen Module M1 ... Mx ... zu gewährleisten, auch wenn keine Signale übertragen werden.

Die Signalisierungsendstufe 1 weist die drei Schaltmittel S1, S2 und S3 auf, die jeweils zwischen einem ersten Spannungspotential ϕ1, der Leitung L1, der Leitung L2 und einem zweiten Spannungspotential ϕ2, welches als das niedrigere der beiden definiert ist. Diese Bestimmung ist einzig als Voraussetzung für die Eindeutigkeit der im folgenden zu beschreibenden Verfahren zu verstehen. Die Schaltmittel S1 bis S3 sind in Fig. 1 als Schalter skizziert, real jedoch selbstverständlich in Form von an sich bekannten Transistorschaltern ausgeführt.

Außerdem ist in Fig. 1 exemplarisch ein Kurzschluß der ersten Leitung L1 auf ein drittes Spannungspotential ϕ3 skizziert. Derartige Kurzschlüsse auf Masse oder ein drittes Spannungspotential entstehen bspw. durch Isolationsfehler an den Leitungen L1 und L2 sowie eventuell räumlich benachbarter Baugruppen und Leiter. Da insbesondere im Bereich der Kfz-Elektronik das Gehäuse als elektrisches Massepotenial verwendet wird, kann bereits ein leichter Defekt in der Isolation der Leitungen zum permanenten Masse-Kurzschluß führen. Auch der Kurzschluß auf das bspw. Betriebsversorgungsspannungspotential in einer anderen ebenfalls schlecht isolierten Leitung kann auftreten.

Die Leitungen L1 und L2 sind bei geöffneten Schaltmitteln S1,S2,S3 im Normalbetriebszustand potentialfrei und floatend, wodurch sie beide bei entsprechender Kombination der Schaltmittetzustände sowohl das erste als auch das zweite Spannungspotential annehmen können. Erst bei einem Kurzschluß an einer Leitung tritt für diese ein nunmehr festes Potential (zweites oder drittes Spannungspotential) auf, so daß die Signalisierung dies berücksichtigen muß.

Die Signalisierungsendstufe 1 bzw. deren Schaltmittel S1, S2 und S3 werden von einer Steuerung 3 der Zentraleinheit 2 angesteuert. Außerdem weisen in diesem Ausführungsbeispiel alle Schaltmittel S1 - S3 eine jeweils zugeordnete Strom - Prüfeinrichtung I1 - 13 auf. Diese bestimmt den jeweils durch das Schaltmittel fließenden Strom und vergleicht diesen mit einem zulässigen Wertebereich. Wird dieser Wertebereich überschritten, entscheidet die mit diesen Prüfeinrichtungen I1 bis 13 verbundene Steuerung 3 über einen Wechsel des Signalisierungsverfahrens. Die dabei angewendete Auswahlentscheidung wird in Fig. 3 noch näher erläutert. Durch die Prüfeinrichtungen I1 bis I3 soll der Betriebszustand der schaltmittel S1 bis S3 und der Leitungen L1 und L2 überwacht, insbesondere das Auftreten eines Kurzschlusses einer der Leitungen auf ein drittes Spannnungspotential bzw. Masse erkannt werden. Es ist natürlich ebenso möglich, anstelle des Stromes durch die Schaltmittel dafür die Spannungspotentiale der zwei Leitungen L1 und L2 durch nicht gezeigte Spannungs - Prüfeinrichtungen zu erfassen und entsprechend angepaßten Wertebereichen zu vergleichen.

Die besonderen Vorteile dieser Signalisierungsendstufe sind auch insbesondere anhand der damit nun möglichen Signalisierungsverfahren erkennbar, die im folgenden anhand der Übersicht in Fig. 2 erläutert werden sollen.

So ist beim Kurzschluß einer Leitung bis auf einen einzigen Fall die Signalisierung weiterhin in fast allen Fällen grundsätzlich möglich, indem im Prinzip diese nunmehr kurzgeschlossene Leitung als festes Bezugspotential genutzt und die jeweils andere Leitung entsprechend zur Signalisierung beschaltet wird. Durch das Schaltmittel S2 zwischen den Leitungen L1 und L2 wird es möglich, den LOW-Spannungspegel auch dann zu erzeugen, wenn eine der Leitungen ein festes Potential hat. Dies erfolgt derart, daß das Schaltmittel S2 dann jeweils geschlossen wird und darüber die noch floatende Leitung das Spannungs-potential der gestörten Leitung annehmen kann, so daß über den Modulen M1...Mx... eine Potentialdifferenz U entsteht, die dem LOW-Spannungspegel entspricht. Der High-Spannungspegel wird bei einer Leitung mit festem Potential jeweils als Potentialdifferenz u des ersten oder zweiten Spannungspotentials bezüglich diesem festen Potential erzeugt (U=ϕ1-ϕ3 oder U=ϕ2-ϕ3). Das Vorzeichen der Potentialdifferenz kann grundsätzlich durch eine Gleichrichtungsschaltung an den Eingängen der Module M1...MX... berücksichtigt werden.

Die Schaltmittel S1 bis S3 sind wieder analog zu Fig. 1 angeordnet. Die Schaltzustände dieser werden als "zu" für den leitenden Zustand des jewieligen Schaltmittels und als "auf" für den nichtleitenden Zustand bezeichnet. "High" steht für den High - Spannungspegel, "Low" entsprechend für den "Low"-Spannungspegel. im Betriebszustand B1 wird außerdem noch der Wechsel von "High" auf "Low" durch den Pfeil "→" diskutiert.

im Betriebszustand B1 sind die Leitungen L1 und L2 floatend, d.h. potentialfrei, wenn alle drei Schaltmittel S1..S3 geöffnet sind. Beide Leitungen können somit aktiv zur Signalisierung genutzt werden. "High" ergibt sich bei der gezeigten Schaltmittelstellung als Potentialdifferenz aus ϕ1 und ϕ2.

Zum Wechsel High → LOW wird bei sich öffnendem S1 zunächst wenigstens kurzzeitig S2 geschlossen, für die Aufrechterhaltung eines Low-Spannungspegels vorzugsweise aber auch geschlossen gehalten. Zunächst werden durch den Kurzschluß über S2 werden die kapazitativen Anteile der Schaltmittel, Leitungen und Module schneller entladen und die Schaltgeschwindigkeit erhöht. In den folgenden Betriebszuständen B2..B4 ist dieser Wechsel nicht mehr dargestellt, da dieser Wechsel letztlich unabhängig von den einzelnen Signalisierungsverfahren eingesetzt werden kann. Das Schaltmittel S3 ist für den Wechsel und den LOW - Spannungspegel nicht zwingend erforderlich, kann jedoch vorteilhafter Weise geschlossen und L2 auf ϕ2 gebracht werden, was üblicherweise das Massepotential ist. Ausnahme ist der Betriebszustand, bei dem L2 auf ϕ3 kurzgeschlossen ist, da durch das Schließen von S3 es dann zu einem Kurzschluß kommen würde.

Als Betriebszustand B2 wird in der Übersicht in Flg. 2 zunächst die Signalisierung für einen Kurzschluß von L1 auf das dritte Spannungspotential ϕ3 gezeigt, welches bspw. die Betriebsversorgungsspannung sein kann. In diesem Fall wird durch S2 und S3 die Signalisierung bewirkt. Der High - Spannungspegel ergibt sich nun als Potentialdifferenz von ϕ3 und ϕ2, "LOW" wie üblich durch Kurzschluß von L1 und L2 über S2. Der Zustand von S1 ist dabei einzig aus Rücksicht auf die Verlustleistung vorzugsweise permanent offen, da anderenfalls ein Schluß von ϕ3 auf ϕ1 entstände. Die für diesen Fall gezeigte Signalisierung läßt sich selbstverständlich auch für einen Kurzschluß von L1 auf ϕ1 anwenden.

Als Betriebszustand B3 wird die Signalisierung für einen Kurzschluß von L2 auf das dritte Spannungspotential ϕ3 gezeigt. Die Signalisierung erfolgt dabei über S1 und S2, wobei sich "High" als Potentialdifferenz aus ϕ1 (S1 zu) und ϕ3 ergibt, "LOW" durch Kurzschluß von L1 und L2 über S2. S3 ist zur Vermeidung einer zu hohen Verlustleitung bei Kurzschluß über S3 vorzugsweise permanent offen.

Als Betriebszustand B4 wird die Signalisierung für einen Kurzschluß von L2 auf ϕ2 gezeigt. Die Signalisierung erfolgt wieder über S1 und S2, wobei in diesem Fall sich "High" wie im Normalbetrieb als Potentialdifferenz aus ϕ1 (S1 zu) und ϕ2 ergibt, jedoch L2 fest auf dem zweiten Spannungspotential ϕ2 ist. "LOW" wird wieder durch Kurzschluß von L1 und L2 über S2 erzeugt. Der Zustand von S3 ist in diesem Betriebszustand B4 nicht entscheidend, in diesem Ausführungsbeispiel bspw. als "auf" gesetzt.

Figur 3 zeigt eine Auswahlentscheidungstabelle des angewendeten signalisierungsverfahrens aufgrund der gemessenen Betriebszustände. in diesem gezeigten Beispiel wurde von einer Messung des Spannungspotentials der Leitungen L1 und L2 ausgegangen. Durch Kreuze gestrichen sind die durch die Signalisierungsendstufe alleine nicht behebbaren Zustände, die Doppelfehler und die zwei folgenden Betriebszustände, nämlich der Kurzschluß von L1 auf ϕ2 sowie der von L2 auf ϕ1, also dem jeweils bezüglich des anliegenden äußeren Schaltmittels (S1, S3) entgegengesetzte Spannungspegel. Die Ströme in den einzelnen Strom - Prüfeinrichtung I1 bis 13 der Schaltmittel S1 bis S3 können den Betriebszuständen eindeutig zugeordnet werden, bspw. bei zu hohem Strom in I3 ist L2 auf ϕ1 oder ϕ3, wenn zusätzlich auch der Strom in I2 zu hoch ist, ist L1 auf einem dieser Spannungspotentiale und wenn trotz geschlossenen S3 und S1 kein Strom in I3, jedoch in I1 fließt, ist ein Kurzschluß auf ϕ2 in einer der Leitungen L1 oder L2. Dies kann auch noch unterschieden werden, indem nur S1 geschlossen wird. Falls dann bereits jetzt der Strom in I1 zu hoch ist, ist L1 auf ϕ2. Der floatende zustand wird jeweils durch die Potentialdifferenz zwischen L1 und L2 erkannt, die in diesem Fall für geschlossenes Schaltmittel S2 Null ist.

Figur 4 zeigt nun eine Weiterbildung der Erfindung durch Verwendung von Modulen mit Längsschaltern zur Isolierung eines Kurzschlusses auf der Leitung. So kann, wie im folgenden erläutert wird, in den bisher durch die Signalisierungsendstufe alleine nicht lösbaren Betriebszuständen trotzdem eine Signalisierung durchgeführt werden, wenn ein BUS-System verwendet wird, bei dem für alle Module M wenigstens eine Kurzschlußprüfeinrichtung 4 für die zwei Leitungen L1, L2 vorgesehen ist, die den Ausgang der jeweiligen Leitung auf einen wirksamen Kurzschluß, nämlich einen dort wirksamen zu kleinen Widerstand, prüft. Für jede der zwei Leitungen L1, L2 ist jeweils eine Schaltereinrichtung 5 zwischen dem Ein- und Ausgang einer Leitung in einem Modul (Mx, Mx-1) vorgesehen, die leitend (5a) oder nichtleitend sein kann (5b).

Durch diese sogenannten Längsschalter 5 mit Kurzschlußprüfeinrichtung 4 kann jedoch ein Kurzschluß auf einen Leitungsabschnitt zwischen zwei Module (Mx, Mx-1) begrenzt und die Signalisierung außerhalb unverändert fortgesetzt werden, indem die Schaltereinrichtungen 5a (zu), 5b (auf) erst dann jeweils eine Verbindung (5a) zwischen dem Ein- und Ausgang jeder der zwei Leitungen durchschalten, wenn mittels der Kurzschlußprüfeinrichtung(en) 4 an dem jeweiligen Ausgang eine Prüfung durchgeführt wurde und diese das Nichtvorhandensein eines Kurzschlusses ergeben hat.

Eine Verwendung derartiger Längsschalter erhöht weiter die Sicherheit der Signalübertragung und ist für die Signalisierungsendstufe vorteilhaft anzuwenden, denn mittels dieser kann die jeweils ungestörte Leitung zur Signalübertragung verwendet werden. In den Modulen M ist ein internes Massepotential vorgesehen, gegenüber dem die Spannungspotentiale zur Signalisierung dann eine Potentialdifferenz aufbauen.

## Patentansprüche

1. Signalisierungsendstufe (1) zur Erzeugung digitaler Spannungssignale auf einem Bussystem mit einer Zentraleinheit (2) und einer Mehrzahl über zwei Leitungen (L1, L2) mit dieser verbundener Module (M), wobei die digitalen Spannungssignale einen High- und einen dem gegenüber niedrigeren Low-Spannungspegel annehmen,
a) ein oberes Schaltmittel (S1) zwischen einem ersten Spannungspotential (ϕ1) und der ersten Leitung (L1) sowie ein unteres Schaltmittel (S3) zwischen einem zweiten, gegenüber dem ersten niedrigeren Spannungspotential (ϕ2) und der zweiten Leitung (L2) vorgesehen ist,
b) die Zentraleinheit eine Prüfeinrichtung (I1..I3) aufweist, mit der Fehler auf den Leitungen, insbesondere Kurzschlüsse auf ein Spannungspotential, erkannt werden,
c) wobei ein Normalbetriebszustand (B1) vorgesehen ist, bei der die Signalerzeugung erfolgt, indem der High - Spannungspegel durch Schließen des oberen und unteren schattmittels (S1, S3) sowie der Low - Spannungspegel durch öffnen zumindest des oberen Schaltmittels (S1) erzeugt wird, und
d) für den Fall eines Fehlers weitere unterschiedliche Betriebszustände (B2-B4) vorgesehen sind, die eine an die Art des Fehlers angepaßte Erzeugung der digitaler Spannungssignale trotz des Fehlers ermöglichen, **dadurch gekennzeichnet, daß**
e) ein mittleres Schaltmittel (S2) zwischen der ersten (L1) und der zweiten Leitung (L2) vorgesehen ist, mittels dem zumindest bei einem Fehler auf einer Leitung die Signalerzeugung aufrechterhalten wird.

2. Signalisierungsendstufe nach Anspruch 1, **dadurch gekennzeichnet, daß**
a) das erste und zweite Spannungspotential (ϕ1,ϕ2) gegenüber einem dritten Spannungspotential (ϕ3), insbesondere einer Versorgungsspannung so gewählt werden,
a1) daß eine Potentialdifferenz (U) zwischen dem dritten (ϕ3) und einem der zwei anderen Spannungspotentiale (ϕ1 oder ϕ2) von den Modulen IM) noch als High - Spannungspegel erfaßt wird, und
b) zum Normalbetriebszustand (B1) hinzu zumindest drei weitere Betriebszustände (B2,B3,B4) vorgesehen sind,
b1) ein zweiter Betriebszustand (B2) vorgesehen ist, bei dem die erste Leitung (L1) auf das dritte Spannungspotential (ϕ3) kurzgeschlossen ist, bei dem die Signalerzeugung erfolgt, in dem durch Schließen des unteren Schaltmittels (S3) und Öffnen des mittleren Schaltmittels (S2) über den Modulen (M) eine sich aus dem dritten und zweiten Spannungspotential ergebende Potentialdifferenz (U =ϕ3-ϕ2) erzeugt wird, die von den Modulen (M) dem High - Spannungspegel gleichgesetzt wird und durch Öffnen des unteren (S3 auf) und Schließen des mittleren Schaltmittels (S2 zu) ein dem Low - Spannungspegel entsprechende Potentialdifferenz (U=ϕ3-ϕ3=0) über den Modulen (M) erzeugt wird,
b2) ein dritter Betriebszustand (B3) vorgesehen ist, bei dem die zweite Leitung auf das dritte Spannungspotential (L2 = ϕ3) kurzgeschlossen ist, bei dem die Signalerzeugung erfolgt, in dem durch Schließen des oberen (S1 zu) und Öffnen des mittleren Schaftmittels (S2 auf) über den Modulen (M) eine sich aus dem ersten und dritten Spannungspotential ergebende Potentialdifferenz (U=ϕ1-ϕ3) erzeugt wird, die von den Modulen (M) dem High - Spannungspegel gleichgesetzt wird und durch öffnen des oberen (S1 auf) und Schließen des mittleren Schaltmittels (S2 zu) ein dem Low - Spannungspegel entsprechende Potentialdifferenz (U) über den Modulen (M) erzeugt wird,
b3) ein vierter Betriebszustand (B4) vorgesehen ist, bei dem die zweite Leitung auf das zweite Spannungspotential (L2=ϕ2) kurzgeschlossen ist und bei dem die signalerzeugung erfolgt, in dem durch Schließen des oberen Schaltmittels (S1) und Öffnen des mittleren Schaltmittels (S2) über den Modulen (M) der High - Spannungspegel erzeugt wird, und durch öffnen des oberen und Schließen des mittleren Schaltmittels (S1,S2) eine dem Low - Spannungspegel entsprechende Potentialdifferenz (U =ϕ2-ϕ2=0) über den Modulen (M) erzeugt wird.

3. Signalisierungsendstufe nach Anspruch 1 oder 2, **dadurch gekennzeichnet, daß,** wenn alle drei Schaltmittel (S1 .. S3) geöffnet sind, die beiden Leitungen (L1, L2) potentialfrei sind, insbesondere auch nicht auf Masse geschlossen sind.

4. Signalisierungsendstufe nach einem der vorangehenden Ansprüche, **dadurch gekennzeichnet, daß** das zweite spannungspotential (ϕ2) das Massepotential ist.

5. Signalisierungsendstufe nach einem der vorangehenden Ansprüche, **dadurch gekennzeichnet, daß** die Module (M) jeweils parallel zueinander zwischen der ersten und zweiten Leitung (L1,L2) angeordnet sind.

6. Signalisierungsendstufe nach einem der vorangehenden Ansprüche, **dadurch gekennzeichnet, daß** in allen Betriebszuständen (B1-B4) zumindest beim Wechsel vom High- in den Low - Spannungspegel das mittlere Schaltmlttel (S2) zwischen der ersten und der zweiten Leitung (L1, L2) zumindest kurzzeitig geschlossen wird, während zumindest das obere (S1), vorzugsweise auch das untere Schaltmittel (S3) geöffnet sind.

7. Signalisierungsendstufe nach einem der vorangehenden Ansprüche, **dadurch gekennzeichnet, daß** im Normalbetriebszustand (B1) im Lowspannungspegel das untere Schaltmittel (S3) geschlossen ist

8. Signalisierungsendstufe nach einem der vorangehenden Ansprüche, **dadurch gekennzeichnet, daß** im vierten Betriebszustand (B4) das untere Schaltmittel (S3) für beide Spannungspegel geöffnet wird.

9. Signalisierungsendstufe nach einem der vorangehenden Ansprüche, **dadurch gekennzeichnet, daß** im zweiten Betriebszustand (B2) das obere Schaltmittel (S1) für beide Spannungspegel geöffnet wird.

10. Signalisierungsendstufe nach einem der vorangehenden Ansprüche, **dadurch gekennzeichnet, daß** im dritten Betriebszustand (B3) das untere Schaltmittel (S3) für beide Spannungspegel geöffnet wird.

11. Signalisierungsendstufe nach einem der vorangehenden Ansprüche, **dadurch gekennzeichnet, daß** die Prüfeinrichtung den Stromfluß bei einem geschlossenem Schaltmittel (S1..S3) und/oder das spannungspotential der zwei Leitungen (L1, L2) mißt.

12. Verwendung der Signalisierungsendstufe gemäß einem der vorangegangenen Ansprüche in einem BUS-System,
a) bei dem für alle Module eine wenigstens eine Kurzschlußprüfeinrichtung (4) für die zwei Leitungen (L1,L2) vorgesehen ist, die den Ausgang der jeweiligen Leitung auf einen wirksamen Kurzschluß, nämlich einen dort wirksamen zu kleinen widerstand, prüft, bei der
b) für jede der zwei Leitungen (L1,L2) jeweils eine Schaltereinrichtung (5a, 5b) zwischen dem Ein- und Ausgang einer Leitung vorgesehen ist und
c) bei der die Schaltereinrichtungen (5a zu, 5b auf) erst dann jeweils eine Verbindung (5a zu) zwischen dem Ein- und Ausgang jeder der zwei Leitungen (L1,L2) durchschalten, wenn mittels der Kurzschlußprüfeinrichtung (4) an dem jeweiligen Ausgang eine Prüfung durchgeführt wurde und diese das Nichtvorhandensein eines Kurzschlusses ergeben hat.

## Claims

1. Signalling output stage (1) for generating digital voltage signals on a bus system having a central unit (2) and a plurality of modules (M) connected thereto by two lines (L1, L2), wherein the digital voltage signals assume a high-voltage level and an, in comparison thereto, lower low-voltage level,
a) an upper switching means (S1) is provided between a first voltage potential (ϕ1) and the first line (L1) and a lower switching means (S3) is provided between a second, in relation to the first lower, voltage potential (ϕ2) and the second line (L2),
b) the central unit comprises a test device (I1 .. I3), by means of which faults on the lines, in particular short circuits to a voltage potential, are detected,
c) wherein a normal operating state (B1) is provided, in which the signal generation is effected in that the high-voltage level is generated by closing the upper and lower switching means (S1, S3) and the low-voltage level is generated by opening at least the upper switching means (S1), and
d) in the event of a fault further different operating states (B2-B4) are provided, which despite the fault enable a generation of the digital voltage signals that is adapted to the nature of the fault,
**characterized in that**
e) provided between the first (L1) and the second line (L2) is a middle switching means (S2), by means of which at least in the event of a fault on a line the signal generation is maintained.

2. Signalling output stage according to claim 1,
**characterized in that**
a) the first and second voltage potential (ϕ1, ϕ2) are selected in relation to a third voltage potential (ϕ3), in particular a supply voltage, in such a way
a1) that a potential difference (U) between the third (ϕ3) and one of the other two voltage potentials (ϕ1 or ϕ2) is still detected as high-voltage level by the modules (M), and
b) in addition to the normal operating state (B1) at least three further operating states (B2, B3, B4) are provided,
b1) a second operating state (B2) is provided, in which the first line (L1) is shorted to the third voltage potential (ϕ3), at which the signal generation is effected, **in that** by closing the lower switching means (S3) and opening the middle switching means (S2) by means of the modules (M) a potential difference (U=ϕ3-ϕ2) is generated, which results from the third and second voltage potential and is equated with the high-voltage level by the modules (M), and by opening the lower (S3 open) and closing the middle switching means (S2 closed) a potential difference (U=ϕ3-ϕ3=0) corresponding to the low-voltage level is generated by means of the modules (M),
b2) a third operating state (B3) is provided, in which the second line is shorted to the third voltage potential (L2 = ϕ3), at which the signal generation is effected, **in that** by closing the upper (S1 closed) and opening the middle switching means (S2 open) by means of the modules (M) a potential difference (U=ϕ1-ϕ3) is generated, which results from the first and third voltage potential and is equated with the high-voltage level by the modules (M), and by opening the upper (S1 open) and closing the middle switching means (S2 closed) a potential difference (U) corresponding to the low-voltage level is generated by means of the modules (M)
b3) a fourth operating state (B4) is provided, in which the second line is shorted to the second voltage potential (L2 = ϕ2) and in which the signal generation is effected **in that** by closing the upper switching means (S1) and opening the middle switching means (S2) by means of the modules (M) the high-voltage level is generated and by opening the upper and closing the middle switching means (S1, S2) a potential difference (U=ϕ2-ϕ2=0) corresponding to the low-voltage level is generated by means of the modules (M).

3. Signalling output stage according to claim 1 or 2, **characterized in that,** when all three switching means (S1 .. S3) are open, the two lines L1, L2) are potential-free, in particular are also not in a closed circuit to ground.

4. Signalling output stage according to one of the preceding claims, **characterized in that** the second voltage potential (ϕ2) is ground potential.

5. Signalling output stage according to one of the preceding claims, **characterized in that** the modules (M) are disposed in each case parallel to one another between the first and second line (L1, L2).

6. Signalling output stage according to one of the preceding claims, **characterized in that** in all operating states (B1-B4) at least upon the change from the high- to the low-voltage level the middle switching means (S2) between the first and second line (L1, L2) is at least briefly closed, while at least the upper switching means (S1), preferably also the lower switching means (S3) are open.

7. Signalling output stage according to one of the preceding claims, **characterized in that** in the normal operating state (B1) in the low-voltage level the lower switching means (S3) is closed.

8. Signalling output stage according to one of the preceding claims, **characterized in that** in the fourth operating state (B4) the lower switching means (S3) is opened for both voltage levels.

9. Signalling output stage according to one of the preceding claims, **characterized in that** in the second operating state (B2) the upper switching means (S1) is opened for both voltage levels.

10. Signalling output stage according to one of the preceding claims, **characterized in that** in the third operating state (B3) the lower switching means (S3) is opened for both voltage levels.

11. Signalling output stage according to one of the preceding claims, **characterized in that** the test device measures the current flow when a switching means (S1 .. S3) is closed and/or measures the voltage potential of the two lines (L1, L2).

12. Use of the signalling output stage according to one of the preceding claims in a bus system,
a) wherein for all modules an at least one short-circuit test device (4) for the two lines (L1, L2) is provided, which which [sic] checks the output of the respective line for an effective short circuit, namely too low a resistance effective there, wherein
b) for each of the two lines (L1, L2) a respective switch device (5a, 5b) is provided between the input and output of a line and
c) wherein the switch devices (5a closed, 5b open) in each case switch through a connection (5a closed) between the input and output of each of the two lines (L1, L2) only when the short-circuit test device (4) at the respective output has conducted a test that has resulted in the absence of a short circuit.

## Revendications

1. Etage final de signalisation (1) pour la production de signaux de tension numériques dans un système de bus, comportant une unité centrale (2) et une multiplicité de modules (M) reliés à cette unité par deux lignes (L1, L2), les signaux de tension numériques prenant un niveau de tension élevé et un niveau de tension bas, inférieur au précédent,
a) un moyen de commutation supérieur (S1) est prévu entre un premier potentiel de tension (ϕ1) et la première ligne (L1) et un moyen de commutation inférieur (S3) est prévu entre un second potentiel de tension (ϕ2) inférieur au premier potentiel de tension, et la seconde ligne (L2),
b) l'unité centrale comporte un dispositif de contrôle (I1...I3), à l'aide duquel des défauts dans les lignes, notamment des courts-circuits à un potentiel de tension, sont identifiés,
c) dans lequel il est prévu un état de fonctionnement normal (B1), dans lequel la production des signaux est réalisée par le fait que le niveau de tension élevé est produit par fermeture des moyens de commutation supérieur et inférieur (S1, S3) et que niveau de tension bas est produit par ouverture au moins du moyen de commutation supérieur (S1), et
d) dans le cas d'un défaut, il est prévu d'autres états de fonctionnement différents (B2-B4), qui permettent une production, adaptée au type du défaut, des signaux de tension numériques en dépit du défaut,
**caractérisé en ce que**
e) il est prévu un moyen médian de commutation (S2) entre la première ligne (L1) et la seconde ligne (L2) moyen à l'aide duquel au moins dans le cas d'un défaut dans une ligne, la production des signaux est maintenue.

2. Etage final de signalisation selon la revendication 1, **caractérisé en ce que**
a) les premier et second potentiels de tension (ϕ1, ϕ2) sont choisis par rapport à un troisième potentiel de tension (ϕ3), notamment une tension d'alimentation, de telle sorte
a1) qu'une différence de potentiel (U) entre le troisième potentiel de tension (ϕ3) et l'un des deux autres potentiels de tension (ϕ1 ou ϕ2) est encore détectée par les modules (M) en tant que niveau de tension élevé, et
b) en plus de l'état de fonctionnement normal (B1), il est prévu au moins trois autres états de fonctionnement (B2, B3, B4),
b1) il est prévu un second état de fonctionnement (B2), dans lequel la première ligne (L1) est court-circuitée sur le troisième potentiel de tension (ϕ3), et dans lequel la production de signalisation est exécutée par le fait que, sous l'effet de la fermeture du moyen de commutation inférieur (S3) et de l'ouverture du moyen de commutation médian (S2), une différence de potentiel (U = ϕ3 - ϕ2), obtenue à partir des troisième et second potentiels de tension, est produite par l'intermédiaire des modules (M), cette différence de potentiel étant rendue égale, par les modules (M), au niveau de tension élevé et, sous l'effet de l'ouverture du moyen de commutation inférieur (S3 ouvert) et de la fermeture du moyen de commutation médian (S2 fermé), une différence de potentiel (U = ϕ3 - ϕ 3 = 0), qui correspond au niveau de tension bas, est produite au moyen des modules (M),
b2) il est prévu un troisième état de fonctionnement (B3), dans lequel la seconde ligne est court-circuitée au troisième potentiel de tension (L2 = ϕ2), et dans lequel la production de signaux est réalisée par le fait que sous l'effet de la fermeture du moyen de commutation supérieur (S1 fermé) et l'ouverture du moyen de commutation médian (32 ouvert), une différence de potentiel (U = ϕ1 - ϕ3) obtenue à partir des premier et troisième potentiels de tension, est produite par l'intermédiaire des modules (M), cette différence de potentiel étant rendue égale, par les modules (M), au niveau de tension élevé, et sous l'effet de l'ouverture du moyen de commutation supérieur (S1 ouvert) et de la fermeture du moyen de commutation médian (S2 fermé), une différence de potentiel (U) correspondant au niveau de tension bas est produite au moyen des modules (M),
b3) il est prévu un quatrième état de fonctionnement (B4), dans lequel la seconde ligne est court-circuit sur le second potentiel de tension (L2 = ϕ2) et dans lequel la production de signaux est réalisée par le fait que le niveau de tension élevé est produit sous l'effet de la fermeture du moyen de commutation supérieur (S1) et de l'ouverture du moyen de commutation médian (S2) par l'intermédiaire des modules (M), et que sous l'effet de l'ouverture du moyen de commutation supérieur et de la fermeture du moyen de commutation central (S1, S2), une différence de potentiel (U = ϕ2 - ϕ2 = 0), qui correspond au niveau de tension bas, est produite au moyen des modules (M).

3. Etage final de signalisation selon la revendication 1 ou 2, **caractérisé en ce que** lorsque les trois moyens de commutation (S1 ... S3) sont tous ouverts, les deux lignes (L1, L2) sont sans potentiel et notamment également ne sont pas fermés à la masse.

4. Etage final de signalisation selon l'une des revendications précédentes, **caractérisé en ce que** le second potentiel de tension (ϕ2) est le potentiel de masse.

5. Etage final de signalisation selon l'une des revendications précédentes, **caractérisé en ce que** les modules (M) sont disposés respectivement parallèlement entre eux entre les première et seconde lignes (L1, L2).

6. Etage final de signalisation selon l'une des revendications précédentes, **caractérisé en ce que** dans tous les états de fonctionnement (B1-B4), au moins lors de la commutation du niveau de tension élevé au niveau de tension bas, le moyen de commutation médian (S2) entre les première et seconde lignes (L1, L2) est fermé au moins pendant un bref intervalle de temps, tandis qu'au moins le moyen de commutation supérieur (S1) et de préférence également le moyen de commutation inférieur (S3) sont ouverts.

7. Etage final de signalisation selon l'une des revendications précédentes, **caractérisé en ce que** dans l'état de fonctionnement normal (B1), pour le niveau de tension bas, le moyen de commutation inférieur (S3) est fermé.

8. Etage final de signalisation selon l'une des revendications précédentes, **caractérisé en ce que** dans le quatrième état de fonctionnement (B4), le moyen de commutation inférieur (S3) est ouvert pour les deux niveaux de tension.

9. Etage final de signalisation selon l'une des revendications précédentes, **caractérisé en ce que** dans le second état de fonctionnement (B2), le moyen de commutation supérieur (S1) est ouvert pour les deux niveaux de tension.

10. Etage final de signalisation selon l'une des revendications précédentes, **caractérisé en ce que** dans le troisième état de fonctionnement (B3), le moyen de commutation inférieur (S3) est ouvert pour les deux niveaux de tension.

11. Etage final de signalisation selon l'une des revendications précédentes, **caractérisé en ce que** le dispositif de contrôle mesure le flux de courant lorsqu'un moyen de commutation (S1 ... S3) est fermé et/ou le potentiel de tension des deux lignes (L1, L2).

12. Utilisation de l'étage final de signalisation selon l'une des revendications précédentes dans un système de bus,
a) dans lequel pour tous les modules il est prévu au moins un dispositif de contrôle de court-circuit (4) pour les deux lignes (L1, L2), qui contrôle la sortie de la ligne respective pour déterminer s'il existe un court-circuit effectif, à savoir une résistance trop faible effective en cet endroit, et dans lequel
b) pour chacune des deux lignes (L1, L2), il est prévu respectivement un dispositif de commutation (5a, 5b) entre l'entrée et la sortie d'une ligne, et
c) dans lequel les dispositifs de commutation (5a fermé, 5b ouvert) établissent respectivement une liaison (5a fermé) entre l'entrée et la sortie de chacune des deux lignes (L1, L2) uniquement lorsqu'à l'aide du dispositif de contrôle de court-circuit (4), un contrôle a été exécuté sur la sortie considérée et que ce contrôle a déterminé l'absence d'un court-circuit.
